# EUROPEAN PATENT APPLICATION

(11) **EP 4 374 950 A1**
(43) Date of publication of application: **29.05.2024**
(21) Application number: 22209518.4
(22) Date of filing: 25.11.2022
(51) Int. Cl.: B01D 53/04, B01J 20/26, B01J 20/28, B01J 20/30

(54) **SORBENT MATERIALS FOR CO2 CAPTURE, USES THEREOF AND METHODS FOR MAKING SAME**

(71) Applicant: Climeworks AG, 8050 Zürich (CH)
(72) Inventor: SPÄLTI, Michael, 5073 Gipf-Oberfrick (CH); KRAMER, Erich, 5200 Brugg (CH); GROB, Markus C., 4153 Reinach BL (CH); ZVOLSKA, Katerina, 5210 Windisch (CH); NIEBEL, Tobias, Zürich (CH); VARGAS, Angelo, Zürich (CH)
(74) Representative: Bremi, Tobias Hans

(57) **Abstract**

A method for separating gaseous carbon dioxide from a gas mixture by cyclic adsorption/desorption using a sorbent material (3) adsorbing said gaseous carbon dioxide in a unit (8), wherein said sorbent material (3) comprises a porous structure of particles of support material functionalized on the surface and/or in the bulk with primary amines, capable of reversibly binding carbon dioxide, glued together with a glue, preferably selected from at least one of a polyurethane and epoxy resin, in the form a contiguous three-dimensional structure, wherein the particles of support material make up 90-99.5% by weight, and the glue makes up 0.5-10%, by weight, and wherein the mean particle size (D50) of the particles of support material is in the range of 0.01 - 4 mm.

## Description

### TECHNICAL FIELD

The present invention relates to carbon dioxide capture materials with primary and/or secondary amine carbon dioxide capture moieties, as well as to methods for preparing such capture materials, and to uses of such capture materials in particular in direct air capture processes.

### PRIOR ART

According to the OECD report of 2017 [Global Energy & CO2 Status Report 2017, OECD/IEA March 2018] the yearly emissions of CO2 to the atmosphere are ca 32.5 Gt (Gigatons, or 32.5x10E9 tons). As of February 2020 all but two of the 196 states that in 2016 have negotiated the Paris Agreement within the United Nations Framework Convention on Climate Change (UFCCC) had ratified it. The meaning of this figure is that a consensus at the time was reached regarding the threat of climate change and regarding the need of a global response to keep the rise of global temperature well below 2 degrees Celsius above pre-industrial levels.

The technical and scientific community engaged in the challenge of proposing solutions to meet the target of limiting CO2 emissions to the atmosphere and to remove greenhouse gases from the atmosphere has envisioned a number of technologies. Flue gas capture, or the capture of CO2 from point sources, such as specific industrial processes and specific CO2 emitters, deals with a wide range of relatively high concentrations of CO2 (3-100 vol %) depending on the process that produces the flue gas. High concentrations make the separation of the CO2 from other gases thermodynamically more favorable and consequently economically favorable as compared to the separation of CO2 from sources with lower concentrations, such as ambient air, where the concentration is in the order of 400 ppmv. Nonetheless, the very concept of capturing CO2 from point sources has strong limitations: it is specifically suitable to target such point sources, but is inherently linked to specific locations where the point sources are located and can at best limit emissions and support reaching carbon neutrality, while as a technical solution it will not be able to contribute to negative emissions (i.e., permanent removal of carbon dioxide from the atmosphere) and to remove emission from the past. In order to achieve negative emissions (i.e., permanent removal carbon dioxide from the atmosphere), the three most notable solutions currently applied, albeit being at an early stage of development, are the capturing of CO2 by means of vegetation (e.g. trees and plants, but not really permanent removal) using natural photosynthesis, by means of combining bioenergy from combustion of biomass with point source CO₂ capture and subsequent permanent storage (BECCS) and by means of DAC and carbon dioxide storage technologies, which also results in permanent removal but a a significantly reduced land footprint compared to BECCS.

Forestation has broad resonance with the public opinion. However, the scope and feasibility of re-forestation projects is debated and is likely to be less simple an approach as believed because it requires a large footprint in terms of occupied potentially arable land surface to captured CO2 ratio. BECCS suffers from the same shortcoming. On the other hand, DAC coupled with carbon dioxide storage technologies has lower land footprint and therefore it does not compete with the production of crops, can permanently remove CO2 from the atmosphere and can be deployed everywhere on the planet.

The above-described strategies to mitigate climate change all have potential and are considered as a potential part of the overall solution. The most likely future scenario is the deployment of a mix of such approaches, after undergoing further development.

Several DAC technologies were described, such as for example, the utilization of alkaline earth oxides to form calcium carbonate as described in US-A-2010034724. Different approaches comprise the utilization of solid CO2 adsorbents, hereafter named sorbents, in the form of packed beds of typically sorbent particles and where CO2 is captured at the gas-solid interface. Such sorbents can contain different types of amino functionalization and polymers, such as immobilized aminosilane-based sorbents as reported in US-B-8834822, and amine-functionalized cellulose as disclosed in WO-A-2012/168346. WO-A-2011/049759 describes the utilization of an ion exchange material comprising an aminoalkylated bead polymer for the removal of carbon dioxide from industrial applications. WO-A-2016/037668 describes a sorbent for reversibly adsorbing CO2 from a gas mixture, where the sorbent is composed of a polymeric adsorbent having a primary amino functionality. The materials can be regenerated by applying pressure or humidity swing. Several academic publications, such as Alesi et al. in Industrial & Engineering Chemistry Research 2012, 51, 6907-6915; Veneman et al. in Energy Procedia 2014, 63, 2336; Yu et al. in Industrial & Engineering Chemistry Research 2017, 56, 3259-3269, also investigated in detail the use of cross-linked polystyrene resins functionalized with primary benzyl-amines as solid sorbents for DAC applications.

The state-of-the-art technology to capture CO2 from point sources typically uses liquid amines, as for example in industrial scrubbers, where the flue gas flows into a solution of an amine (US-B-9186617). Other technologies are based on the use of solid sorbents in either a pack-bed or a flow-through structure configuration, where the sorbent is made of impregnated or covalently bound amines onto a support.

Amines react with CO2 to form of a carbamate moiety, which in a successive step can be regenerated to the original amine, for example by increasing the temperature of the sorbent bed to ca 100°C and therefore releasing the CO2. An economically viable process for carbon capture implies the ability to perform the cyclic adsorption/desorption of CO2 for hundreds or thousands of cycles using the same sorbent material without or with little loss of sorbent performance and without damaging the mechanical integrity of the adsorption unit.

More recently, structured adsorbers have also been employed for capturing CO₂ from flue gas, such as the structures described by WO-A-2010096916 and WO-A-2018085927, that specify parallel passage contactors for the purpose of flue gas CO₂ capture. These adsorber structures in their configuration for flue gas capture are designed for the high concentrations of CO₂ present in flue gas and operate with the aim of capturing a high fraction of CO₂ from the flue gas.

More specifically, WO-A-2018085927 discloses an adsorptive gas separation apparatus and method. The adsorbent structure may include a first adsorbent layer having at least a first adsorbent material, a second adsorbent layer including at least a second adsorbent material, and a barrier layer, where the barrier layer is interposed between the first adsorbent layer and the second adsorbent layer. A parallel passage contactor including a plurality of adsorbent structures each comprising a barrier layer, and arranged to form first and second fluid passages is also disclosed. An adsorption process for separating at least a first component from a multi-component fluid stream using the adsorbent structure is also provided.

US-A-2015139862 discloses a structured adsorbent sheet, including a nano-adsorbent powder, and a binder material, wherein the nano-adsorbent powder is combined with the binder material to form an adsorbent material, and a porous electrical heating substrate, wherein the adsorbent material is applied to the porous electrical heating substrate thereby forming a structured adsorbent sheet. A structured adsorbent module is provided, including a plurality of stacked structured adsorbent sheets, configured to produce a plurality of fluid passages, wherein the plurality of fluid passages have a cross-sectional shape in the direction of a fluid stream. The structured adsorbent module may have a cross-sectional shape that is trapezoidal, rectangle, square, triangular or sinusoidal. A structured adsorbent bed is provided, including a plurality of modules, stacking the modules, thereby providing a plurality of process fluid passages, and a process fluid inlet and a process fluid outlet, in fluid communication with the plurality of process fluid.

US-A-2012076711 discloses a structure containing a sorbent with amine groups that is capable of a reversible adsorption and desorption cycle for capturing CO2 from a gas mixture wherein said structure is composed of fiber filaments wherein the fiber material is carbon and/or polyacrylonitrile.

US-B-8262774 discloses a process for forming a CO2 capture element which comprises providing a mixture of a monomer or monomer blend or a polymer binder, a miscible liquid carrier for the binder and a CO2 sorbent or getter in particle form, forming the mixture into a wet film or membrane, evaporating the liquid carrier to form a film or membrane, and treating the wet film or membrane to form pores in the body of the film or membrane. Also disclosed is a process of forming a CO2 capture element which comprises the steps of applying a mixture including a sorbent material and a polymer to an underlying material; polymerizing the mixture in place on the material; and aminating the polymer-coated material.

US-A-2007217982 discloses an apparatus for capture of CO2 from the atmosphere comprising an anion exchange material formed in a matrix exposed to a flow of the air.

US-B-8999279 provides a method for removing carbon dioxide from a gas stream without consuming excess energy, wherein a solid sorbent material is used to capture the carbon dioxide. The solid sorbent material may utilize a water-swing for regeneration. Various geometric configurations are disclosed for advantageous recovery of CO2 and regeneration of the sorbent material.

US-B-7708806 and US-B-9861933 relate to a method and apparatus for extracting CO2 from air comprising an anion exchange material formed in a matrix exposed to a flow of the air, and for delivering that extracted CO2 to controlled environments. The document contemplates the extraction of CO2 from air using conventional extraction methods or by using one of the extraction methods disclosed; e.g., humidity swing or electro dialysis. The document also provides delivery of the CO2 to greenhouses where increased levels of CO2 will improve conditions for growth. Alternatively, the CO2 is fed to an algae culture. US-B-8715393 discloses a method for removing carbon dioxide from a gas stream, comprising placing the gas stream in contact with a resin, wetting the resin with water, collecting water vapor and carbon dioxide from the resin, and separating the carbon dioxide from the water vapor. The resin may be placed in a chamber or a plurality of chambers connected in series wherein the first chamber contains resin that was first contacted by the gas, and each successive chamber contains resin which has been wetted and carbon dioxide collected from for a greater period of time than the previous chamber, and so on, until the last chamber. Secondary sorbents may be employed to further separate the carbon dioxide from the water vapor.

US-B-9527747 provides a method and apparatus for extracting carbon dioxide (CO2) from a fluid stream and for delivering that extracted CO2 to controlled environments for utilization by a secondary process. Various extraction and delivery methods are disclosed specific to certain secondary uses, included the attraction of CO2 sensitive insects, the ripening and preservation of produce, and the neutralization of brine.

US-B-8088197 and US-B-10010829 are directed to methods for removing CO2 from air, which comprises exposing sorbent covered surfaces to the air. The invention also provides for an apparatus for exposing air to a CO2 sorbent. In another aspect, the invention provides a method and apparatus for separating carbon dioxide (CO2) bound in a sorbent.

### SUMMARY OF THE INVENTION

It is an object of the present invention to provide for improved structured carbon dioxide capture elements, preferably for direct air capture (DAC), in particular in the form of layers or sheets or monolithic structures or channel contactors, which preferably are provided as self-supporting structures without the need of an additional supporting layer.

According to a first aspect of the present invention, it relates to a method as defined in claim 1.

More specifically, the present invention relates to a method for separating gaseous carbon dioxide from a gas mixture, preferably from at least one of ambient atmospheric air, flue gas and biogas, containing said gaseous carbon dioxide as well as further gases different from gaseous carbon dioxide, by cyclic adsorption/desorption using a sorbent material adsorbing at least part of said gaseous carbon dioxide in a unit.

According to the proposed method, it comprises at least the following sequential and in this sequence repeating steps (a) - (e):
(a) contacting said gas mixture with the sorbent material to allow at least said gaseous carbon dioxide (parts thereof or essentially all of the CO2) to adsorb on the sorbent material by flow-through through said unit (and thus through and/or over the sorbent material adsorbing at least part of said gaseous carbon dioxide) under ambient atmospheric pressure conditions and ambient atmospheric temperature conditions in an adsorption step (if ambient atmospheric air is pushed/pulled through the device using a ventilator or the like, this is still considered ambient atmospheric pressure conditions in line with this application, even if the air which is pushed/pulled through the reactor by the ventilator has a pressure slightly above or below the surrounding ambient atmospheric pressure, and the pressure is in the ranges as detailed below in the definition of "ambient atmospheric pressures");
(b) isolating said sorbent material with adsorbed carbon dioxide in said unit from said flow-through, preferably while essentially maintaining the temperature in the sorbent;
(c) inducing an increase of the temperature of the sorbent material, preferably to a temperature between 60 and 110°C, starting the desorption of CO2. This is e.g. possible by injecting a stream of partially of fully saturated or superheated steam, preferably by flow-through through the unit and over/through the sorbent, and thereby inducing an increase of the temperature of the sorbent material to a temperature between 60 and 110°C, starting the desorption of CO2;
(d) extracting at least the desorbed gaseous carbon dioxide from the unit (preferably most or all of the desorbed gaseous carbon dioxide) and separating gaseous carbon dioxide, preferably by condensation, in or downstream of the unit;
(e) bringing the sorbent material to ambient atmospheric temperature conditions and ambient atmospheric pressure conditions (if the sorbent material is not cooled in this step down to exactly the surrounding ambient atmospheric temperature conditions, this is still considered to be according to this step, preferably the ambient atmospheric temperature established in this step (e) is in the range of the surrounding ambient atmospheric temperature +25°C, preferably +10°C or +5°C).

In the context of this disclosure, the expressions "ambient atmospheric pressure" and "ambient atmospheric temperature" refer to the pressure and temperature conditions to that a plant that is operated outdoors is exposed to, i.e. typically ambient atmospheric pressure stands for pressures in the range of 0.8 to 1.1 barabs and typically ambient atmospheric temperature refers to temperatures in the range of -40 to 60° C, more typically -30 to 45°C. The gas mixture used as input for the process is preferably ambient atmospheric air, i.e. air at ambient atmospheric pressure and at ambient atmospheric temperature, which normally implies a CO2 concentration in the range of 0.03-0.06% by volume, and a relative humidity in the range of 3-100%. However, also air with lower relative humidity, i.e. < 3%, or with lower or higher CO2 concentration can be used as input for the process, e.g. with a concentration of 0.1-0.5% CO2 by volume, so generally speaking, preferably the input CO2 concentration of the input gas mixture is in the range of 0.01-0.5% by volume.

According to a preferred embodiment, in step (c) the pressure in the unit (preferably at the end of this step) is in the range of 500-1000 mbarabs, preferably in the range of 550-1000 mbarabs or 600-950 mbarabs. Preferred ranges of 650-700 mbarabs or 700-950 mbarabs, preferably in the range of 750-850 mbarabs.

Preferably step (d) may include reduction of the pressure in the unit to values between 20-500 mbarabs, preferably 50-250 mbarabs by means of evacuation, which causes evaporation of water from the sorbent subsequently both drying and cooling the sorbent. According to one aspect of the invention, the said sorbent material comprises or consists of a porous structure of particles of support material functionalized on the surface and/or in the bulk with primary or secondary amines, or a combination thereof, capable of reversibly binding carbon dioxide, which particles are glued together, e.g. with a glue selected from at least one of a polyurethane and epoxy resin, in the form a contiguous three-dimensional structure.

The expression "glue" in the present context includes polymeric binder materials of the mentioned types, so polymeric binder materials based on polyurethane resins, epoxy resins, or both.

Such a glue can be selected from systems based on elements of the group consisting of: polyamide-imide, polyethersulfone, polysulfone, polyphenylenesulfone, polyphenylenesulfide, polyimide, polyaryletherketones, polyetherimide, (meth)acrylic glues, phenolic glues including novolak, epoxy, polyurethane, alkyd, as well as derivatives, combinations and mixtures thereof. Preferred are glues selected from at least one of a polyurethane and epoxy resin.

Furthermore, the particles of support material functionalized on the surface and/or in the bulk with primary or secondary amines, or a combination thereof, capable of reversibly binding carbon dioxide, make up 90-99.5% or 90-99.2% or preferably 90-99% by weight, and the glue makes up 0.5 - 10% or 0.8-10% or preferably 1-10%, by weight (the weight of the particles of support material functionalized on the surface and/or in the bulk with primary or secondary amines, or a combination thereof, capable of reversibly binding carbon dioxide, and of the glue in each case complementing to 100% by weight of the porous structure).

In addition, the mean particle size (D50) of the particles of support material functionalized on the surface and/or in the bulk with primary or secondary amines, or a combination thereof, capable of reversibly binding carbon dioxide, is in the range of 0.01 - 4 mm, preferably in the range of 0.3 - 4 mm or in the range of 0.1 - 4 mm.

In fact, only under these rather specific conditions a three-dimensional contiguous structure of sufficient mechanical stability can be obtained which also shows carbon dioxide uptake. If particles of lower size are used, irrespective of how much glue is used, either one has to use too much glue and correspondingly completely seals the surface functionality of the particles, or, if one uses less glue, no mechanical coherence can be obtained. If particles of larger size are used, the available surface for the adsorption process is too low leading to too low a capture capacity. So the size range of the particles is a critical parameter. Also, it could be shown that in fact a glued structure may unexpectedly withstand the harsh conditions of cycling through adsorption and desorption, so the structures are capable of withstanding the temperature and humidity conditions in a corresponding repeated cyclic adsorption/desorption process, in particular involving steam for heating and desorption, while providing sufficient carbon dioxide capture capacity and mechanical properties.

If, according to a preferred embodiment, at least one of polyurethane and epoxy resin is chosen as glue, these two types of glues actually allow for a particularly good combination of sufficient carbon dioxide capture capacity and provision of mechanical properties. These types of glue are particularly capable of withstanding the temperature and humidity conditions in a corresponding repeated cyclic adsorption/desorption process, in particular involving steam for heating and desorption, and/or are capable of providing sufficient mechanical properties while at the same time also providing acceptable carbon dioxide capture properties. So these preferred types of glue are a further advantageous parameter. Furthermore, it could be shown that if glues, and in particular the preferred types of glues, are used in the claimed proportion, so in a weight ratio to the particles in the range of 0.5 - 10%, or preferably in the range of 1-10%, a reasonable combination of sufficient mechanical coherence and stability and carbon dioxide capture properties can be obtained. If the glue content is below the claimed range, clearly insufficient mechanical properties are only made available, and if the glue content is above the claimed range, the glue essentially completely seals the porosity and the carbon dioxide capture capacity is lost.

So these 3 parameters, glue, glue proportion as well as particle size are synergistic and interrelated parameters and only if these are chosen as claimed a useful and beneficial compromise of mechanical, carbon dioxide capture, and process resistance and stability properties can be obtained.

According to a first preferred embodiment of the proposed method, the glue, preferably selected from at least one of a polyurethane and epoxy resin, for the making of said contiguous three-dimensional structure is reacted with a hardener.

Typically, in case of polyurethane resin said hardener is preferably selected as at least one monomeric, oligomeric and/or polymeric di- or polyisocyanate, preferably systems based on or consisting of hexamethylendiisocyanate (HDI), toluenediisocyanate (TDI), diphenylmethanediisocyanate (MDI) or combinations thereof, particularly preferably a poly hexamethylendiisocyanate hardener.

Typically, in case of epoxy resin, said hardener is preferably selected from the group consisting of acidic hardener, preferably selected from the group consisting of maleic, and/or phthalic, hexahydrophthalic acid, and/or or amine hardener, preferably selected from the group consisting of polyamines and diamines, including polyethylene polyamine, hexamethylene diamine, triethylene tetramine, or a combination thereof.

Preferably, the glue for the making of said contiguous 3-dimensional structure is a bisphenol A diglycidyl ether based epoxy resin, preferably an unmodified liquid epoxy resin, preferably with a viscosity at 25°C (ISO 12058-1) in the range of 8,000-15,000, preferably in the range of 9,5000-12,000 mPa·s
and/or preferably with an epoxy equivalent weight in the range of 150-220, preferably in the range of 170-200
and/or preferably with a density at 25°C (ISO 1675) in the range of 1.0-1.3, preferably in the range of 1.1-1.25 g/cm3.

The particles of support material functionalized on the surface and/or in the bulk with primary or secondary amines, or a combination thereof, capable of reversibly binding carbon dioxide, further preferably make 95-99% by weight, preferably 96-98% by weight, more preferably 96.5-98 % by weight and the glue makes up 1-5%, preferably 2-4% by weight, most preferably 2-3.5% by weight.

Preferably the three-dimensional contiguous structure consists of the glue and the particles only, so preferably the epoxy resin complements the particles to 100% by weight of said porous structure.

Preferably, the mean particle size (D50) of the particles of support material functionalized on the surface and/or in the bulk with primary or secondary amines, or a combination thereof, capable of reversibly binding carbon dioxide, is in the range of 0.15 - 2 mm, 0.2 - 1.5 mm, 0.25 - 1.6 mm, preferably in the range of 0.25-1.5 mm, most preferably in the range of 0.30-1.25 mm.

Preferably the particles of support material functionalized on the surface and/or in the bulk with primary or secondary amines, or a combination thereof, are essentially spherical in shape.

The contiguous three-dimensional, preferably self-supporting structure of the sorbent material further preferably takes the form of sheet or monolith, or a combination thereof. When taking the form of a sheet this is preferably having a thickness in the range of 0.1-4 mm, or in the range of 0.2-2 mm, and or having a thickness in the range of 0.4-1.1 mm. When taking the form of a monolith, the monolith preferably takes the form of a structure having, in the direction of gas flow in operation, a plurality of through openings of preferably polygonal or round cross-section, preferably triangular, rectangular or square, pentagonal or hexagonal, oval or circular cross-section, wherein preferably the monolith takes the form of a honeycomb structure.

Typically the contiguous three-dimensional structure has a length in adsorption flow direction in the range of 0.1-3 m.

Typically and preferably, the particles of support material functionalized (on the surface and/or in the bulk) with primary or secondary amines, or a combination thereof, capable of reversibly binding carbon dioxide, are ion exchange resin (IER) particles, which can either be manufactured at the desired size or which can be ground before the making process to the desired size.

According to another preferred embodiment, the contiguous three-dimensional structure of the sorbent adsorbs gaseous carbon dioxide by at least one of flow over and flow-through, preferably by a combination of flow over and flow-through of the gas mixture in step (a). Preferably, the particles of support material functionalized on the surface and/or in the bulk with primary or secondary amines, or a combination thereof, capable of reversibly binding carbon dioxide comprise or consist of organic cross linked polymeric polystyrene based support material functionalized on the surface and/or in the bulk with primary or secondary amines, or a combination thereof, preferably cross-linked by divinylbenzene, wherein further preferably the polystyrene based support material is a styrene divinylbenzene copolymer, preferably to form the sorbent material surface and/or in the bulk functionalised with primary amine, preferably methyl amine, most preferably benzylamine moieties, wherein the solid polymeric support material is preferably obtained in a suspension polymerisation process. Step (c) typically involves injecting a stream of partially of fully saturated or superheated steam, preferably by flow-through through said unit for heating the sorbent.

The particles of support material functionalized on the surface and/or in the bulk with primary or secondary amines, or a combination thereof, capable of reversibly binding carbon dioxide preferably have a nitrogen content in the range 4-50 wt.%, preferably in the range of 5 - 25 wt.% or 5 - 15 wt.% or 6 - 12 wt.%, in each case for dry sorbent material.

According to a particularly preferred embodiment, the process is a direct air capture process, which means the gas mixture is ambient atmospheric air.

The present invention furthermore relates to a method for preparing a sorbent material, preferably for use in a method as detailed above.

The sorbent material comprises or consists of a porous structure of particles of support material functionalized on the surface and/or in the bulk with primary or secondary amines, or a combination thereof, capable of reversibly binding carbon dioxide, glued together with a glue, preferably selected from at least one of a polyurethane and epoxy resin, but also possible are the other systems as mentioned above, in the form a contiguous three-dimensional structure,
wherein the particles of support material functionalized on the surface and/or in the bulk with primary or secondary amines, or a combination thereof, capable of reversibly binding carbon dioxide, make up 90-99.5%, preferably 90-99.2% or 90-99% by weight, and the glue makes up 0.5-10%, preferably 0.8-10% or 1-10%, by weight, and
wherein the mean particle size (D50) of the particles of support material functionalized on the surface and/or in the bulk with primary or secondary amines, or a combination thereof, capable of reversibly binding carbon dioxide, is in the range of 0.01-4 mm, preferably 0.3-4mm or 0.1 - 4 mm.

The sorbent material can be characterized for this manufacturing method by one or a combination of the further characterizing features as detailed above.

According to the proposed method, in a first step said particles of support material functionalized on the surface and/or in the bulk with primary or secondary amines, or a combination thereof, capable of reversibly binding carbon dioxide are provided in dried form (normally solid content of > 80 %, preferentially > 85% and/or 90%), mixed and wetted with a liquid comprising the glue and/or consisting of the glue together with a suitable and adapted hardener,

and in a second step the wetted particles are formed into the desired contiguous three-dimensional structure and subjected to hardening conditions, preferably by establishing a temperature of at least 40°C, preferably of at least 50°C, most preferably of at least 60°C and further preferably at most 80°C or at most 70°C, and/or no pressure or a pressure of in the range of 10-150 kN, preferably for a time span of at least one hour, more preferably at least 6 hours, most preferably in the range of 8-15 hours.

In this context it is to be pointed out that one important feature is that the particles are provided in dried form. Providing the particles in water wetted or even water swollen condition has proven not to be suitable, since the swelling leads to a less mechanically stable condition after drying, and does not add to the preservation of the porosity in the glueing process. Furthermore it is noted that the hardener should be provided together with the glue in the mixture to be used for the wetting of the particles.

Furthermore, the present invention relates to a sorbent material for use in a method as detailed above, preferably obtained using a method as detailed above.

Again, said sorbent material comprises or consists of a porous structure of particles of support material functionalized on the surface and/or in the bulk with primary or secondary amines, or a combination thereof, capable of reversibly binding carbon dioxide, glued together with a glue selected from at least one of a polyurethane and epoxy resin in the form a contiguous three-dimensional structure,
wherein the particles of support material functionalized on the surface and/or in the bulk with primary or secondary amines, or a combination thereof, capable of reversibly binding carbon dioxide, make up 90-99.5%, preferably 90-99.2% or 90-99% by weight, and the glue makes up 0.5 - 10%, preferably 0.8 -10 % or 1-10%, by weight, and
wherein the mean particle size (D50) of the particles of support material functionalized on the surface and/or in the bulk with primary or secondary amines, or a combination thereof, capable of reversibly binding carbon dioxide, is in the range of 0.01 - 4 mm, preferably 0.3 - 4 mm or 0.1 - 4 mm.

Again, this sorbent material may have one and/or a combination of the further preferred properties as detailed above in the context of the carbon dioxide capture method.

Last but not least the present invention relates to the use of such a sorbent material for separating gaseous carbon dioxide from a gas mixture, preferably from at least one of ambient atmospheric air, flue gas and biogas, preferably for direct air capture, in particular using a temperature, vacuum, or temperature/vacuum swing process, preferably using a process in which injecting a stream of partially of fully saturated or superheated steam by flow-through the unit is used for inducing an increase of the temperature of the sorbent material to a temperature between 60 and 110°C, resulting in the at least partial desorption of CO2.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic representation of a direct air capture unit;
- Fig. 2: shows in a) the relative breakthrough and in b) the carbon dioxide uptake for monolithic sample ML3% with through holes in which particulate sorbent material is glued together with epoxy glue in a proportion of 3%;
- Fig. 3: shows the carbon dioxide uptake for samples in which particulate sorbent material is glued together with epoxy glue in a proportion of 5%;
- Fig. 4: shows the carbon dioxide uptake for sheet samples in which particulate sorbent material is glued together with PU glue in a proportion of 0.99 and 9.09%.

### DESCRIPTION OF PREFERRED EMBODIMENTS

### Sample preparation:

### Sorbent beads:

The sorbent beads employed are based on porous divinyl benzene crosslinked polystyrene beads (d-0.3-1.5 mm) functionalized with amino methyl-groups to form benzyl amine moieties which can be introduced e.g. in an chloromethylation reaction followed by amination with urotropine.

The sorbent beads used can by synthesized as follows: In a 1 L reactor, 1% (mass ratio) of gelatin and 2% (mass ratio) of sodium chloride are dissolved in 340 mL of water at 45°C for 1h. In another flask, 1 g of benzoyl peroxide is dissolved in a mixture of 59.7 g of styrene, 3.9 g of divinylbenzene (content 80%) and 65.3 g of C11-C13 iso-paraffin. The resulting mixture is then added to the reactor. After that the reaction mixture is stirred and heated up to 70°C maintaining the temperature for 2 h, then the temperature is raised to 80°C and kept it for 3 h, and then raised to 90°C for 6 h. The reaction mixture is cooled down to room temperature and the beads are filtered off using a funnel glass filter and vacuum suction. The beads are washed with toluene and dried in rotavapor.

The polystyrene-divinylbenzene beads are functionalized using the chloromethylation reaction. 5 g of so obtained beads are added to a 3-neck flask containing 50 mL of chloromethyl methyl ether. The mixture is stirred for 1 h, 2 g of zinc chloride is added and is heated to 40°C and kept it for 24 h. After that, the beads are filtered off and wash with 25% HCI and water to obtain chloromethylated beads. To obtain benzylamine units, the chloromethylated beads are aminated using the following procedure. The chloromethylated beads are added to a three-necked flask with 27 g of methylal and the mixture is stirred for 1 h. To this mixture, 16 g of hexamethylenetetramine and 13 g of water are added and kept under gentle reflux for 24 h. The beads are filtered off and washed with water. To have a primary amine, a hydrolysis step followed by a treatment with a bases are required. The beads are placed in a 3-neck flask containing 140 mL of a solution of hydrochloric acid (30%) - ethanol (95%) (volume ratio of 1:3), the reaction mixture is heated to 80°C and kept at this temperature for 20 h. After that, the beads are filtered off and washed with water. At this stage the amine is protonated and to free the base, the beads are treated with 50 mL of an NaOH solution 2 M, and stirred with 1 h at 80°C. The aminated beads are filter off and washed to neutral pH with demineralized water.

### Epoxy-Samples:

### EP5%:

Araldit LY 1556 (Huntsman, 10g) and Triethylenentetramine (Aldrich, 1.3 g) were mixed by stirring in a beaker. 0.5 g of this mixture were combined with 9.5 g sorbent beads (=5% matrix) and mixed until homogenous. The mixture was used for filling an aluminum mold of approx. 4 cm diameter and 1 cm thickness and cured for 8 h at 60 °C in an convection oven. ML3% (Channeled Monolith 3% Epoxy):
Araldit LY 1556 (Huntsman, 20g) and Triethylenentetramine (Aldrich, 2.6 g) were mixed by stirring in a beaker. 6 g of this mixture were combined with 194 g sorbent beads (=3% matrix) and mixed until homogenous. An aluminum mold of 74 mm x 74 mm x 50 mm was filled with this mixture and cured in a convection oven at 60 °C for 12 h. After demolding the monolith, through holes with a diameter of 4 mm and a midpoint distance of 8 mm were drilled in a regular rectangular pattern and the monolith was cut on a bandsaw to its final dimensions of 51 mm x 51 mm x 40 mm with a 6 x 6 channel pattern.

### PU-Samples:

### PU15: 0.99% PU matrix:

Lupranol 2074 (BASF DE, 0.125 g) and poly hexamethylene diisocyanate (Aldrich, 0.125 g) were mixed in a beaker manually. Afterwards the mixture was added to 25 g of beads (=0.99% matrix) and again mixed manually. The mixture was placed in a pressing mold (170 x 85 mm) with 2 mm spacers and distributed using a spatula. The mold was put into a press at 80 °C and 100kN and was left under pressure overnight (12h). In the morning the heating was turned off, the pressure released and the mold cooled down to room temperature and the plate was removed.

### PU16: 9.09% PU matrix:

Lupranol 2074 (BASF DE, 5 g) and poly hexamethylene diisocyanate (Aldrich, 5 g) were mixed by hand and added to 100 g of sorbent beads (=9.09% matrix) and mixed in again by hand. The mixture was placed in a mold with 2mm spacers distributed using spatula and put in an oven at 80 °C overnight. In the morning, the mold was removed from the oven and cooled down to room temperature. Afterwards the plate was removed from the mold. The resulting plate has a thickness of ca 3 mm.

### Sample properties:

Porosity: To understand how the porosity changes after exposing the resin to glue and temperatures and to confirm that the binder does not clog the pores significantly, we measured the porosity before gluing and after gluing.

Mercury porosimetry measurement were performed to analyze the pore sizes and volumes > 0.01 microns.

A series of experiments shows that for increasing the glue content above 10%, the porosity for all samples is essentially lost. There is a gradual decrease of the porosity as a function of the glue content. For glue contents below 0.5%, the mechanical stability of the samples is not given. Up to a glue content of 5% all samples show a similar porosity pattern independent of the glue amount. So the claimed range provides an optimum compromise between mechanical stability and porosity.

### Cyclic adsorption performance:

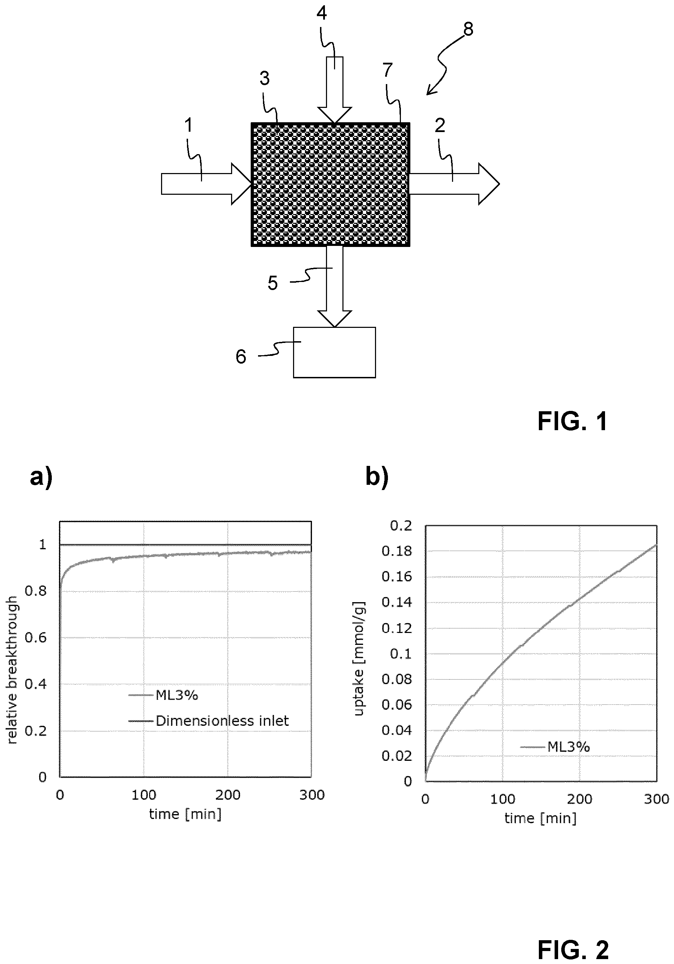

The general test rig is schematically illustrated in **Fig. 1****.** There is an ambient air inflow structure 1 and the actual reactor unit 8 comprises a container or wall 7 within which the structures of sorbent material 3 described above are located. There is an inflow structure 4 for desorption, steam and/or heat are used for desorption, and there is a reactor outlet 5 for extraction. Further, there is a vacuum unit 6 for optional evacuating the reactor. Such experimental rig, hereafter referred to as adsorption/desorption device A, was used for characterizing the cyclic adsorption performance.

Sheet type materials (PU15 and PU16) were cut into samples of approx. 2 cm x 4 cm and placed into a holder with outer dimensions of approx. 5 cm x 5 cm and an inlet area of -45x20 mm and a height of ~4 cm, at a spacing of approximately 2-3 mm between two parallel sheets.

The holder was placed into an aluminum measurement cell used in the reactor of the device A. The channeled monolithic sample ML3% was placed into the same aluminum cell without an additional holder.

The cyclic adsorption/desorption capacity was measured in consecutive runs at relative humidity of the ambient air of approximately 60% and temperature of approximately 21°C at a flow of approximately 20 NI (norm liter, at 0°C at 1013.25 Pa). The desorption process was performed using a warm fluid to increase the temperature of the sorbent. In this specific example, saturated steam was employed. The sorbent beds were first adsorbed for 120, 240 or 300 min using ambient air with a CO2 concentration stabilized at 450 ppm. Once the adsorption was completed, the pressure of the system was brought down to 150 mbarabs. As soon as the pressure is reached, saturated steam is supplied to the sorbent bed up to reaching a temperature of ca 95°C. After that, the sorbent was brought to 150 mbarabs until a temperature of 60°C is reached.

Fig. 2 illustrates measurements on epoxy glued sample ML3% manufactured as detailed above. As one can see from the figure there is reasonable breakthrough and reasonable uptake.

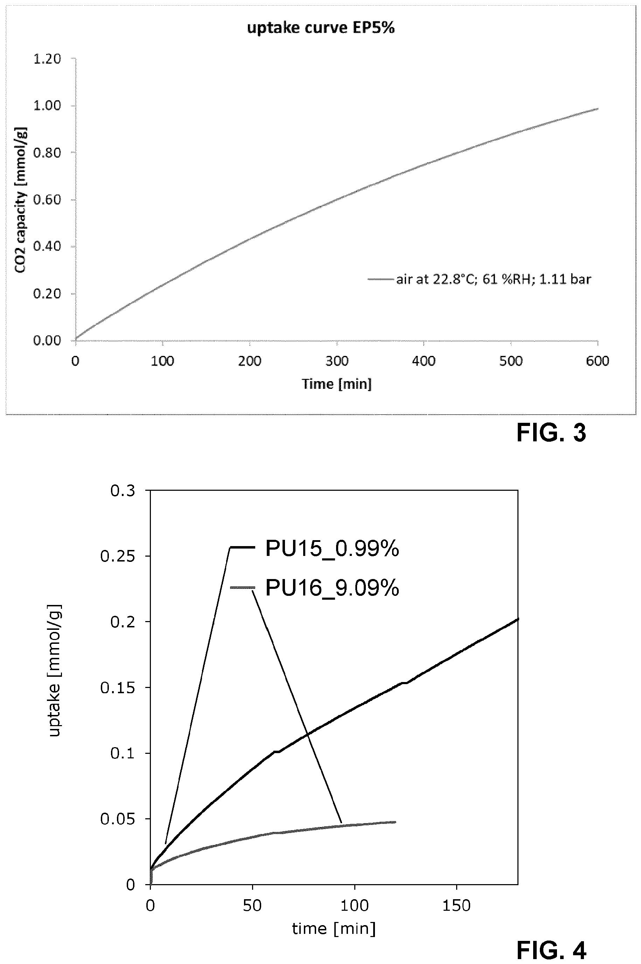

The measured uptake for the PU samples is illustrated in **Fig. 4** documenting that for 1 % PU glue content, there is acceptable adsorption, while a content of 10% is a limit value, below there is no significant and sufficient carbon dioxide adsorption any more on a reasonable timescale.

Additionally, selected sorbents were tested in "device B ". In this device about 2 g of glued sorbent pieces (mechanically broken from larger samples) are placed in a tubular double wall reactor (0=10 mm, h~10 cm) which is flown-through by an oil-stream feeding from one of two thermostatic reservoirs. Initially, the sorbent is desorbed by switching this oil flow to 100 °C for 45 min while passing an air stream (2 NL/min) through the reactor. Afterwards the oil stream is switched to feed from a reservoir at colder temperature and the reactor is cooled without gas-flow. After reaching a set threshold temperature, the sorbent is exposed to a 2 NL/min flow of humidified air containing 450 ppm CO2 for a duration of 600 min. According to the desired climatic conditions the temperature of the oil stream around the reactor and the amount of water dosed for humidification are set.

The measured uptake for the epoxy glued sample EP5% is illustrated in **Fig. 3****.**

**Fig. 3** shows the adsorption characteristics of sheets of material manufactured as detailed above for an epoxy glue content of 5%, also illustrating reasonable uptake under the conditions illustrated in the figure.

**LIST OF REFERENCE SIGNS**

| | | | |
|---|---|---|---|
| 1 | Ambient air, ambient air inflow structure | | and/or steam inflow structure for heat/steam desorption |
| 2 | Outflow of ambient air behind adsorption unit in adsorption flow-through mode | 5 | Reactor outlet for extraction |
| | | 6 | Vacuum unit/separator |
| | | 7 | Wall |
| 3 | Sorbent material | 8 | Reactor unit |
| 4 | Heat and/or steam, heat | | |

## Claims

1. A method for separating gaseous carbon dioxide from a gas mixture, preferably from at least one of ambient atmospheric air (1), flue gas and biogas, containing said gaseous carbon dioxide as well as further gases different from gaseous carbon dioxide, by cyclic adsorption/desorption using a sorbent material (3) adsorbing said gaseous carbon dioxide in a unit (8),
wherein the method comprises at least the following sequential and in this sequence repeating steps (a) - (e):
(a) contacting said gas mixture with the sorbent material (3) to allow at least said gaseous carbon dioxide to adsorb on the sorbent material (3) by flow-through through said unit (8) essentially under ambient atmospheric pressure conditions and ambient atmospheric temperature conditions in an adsorption step;
(b) isolating said sorbent material (3) with adsorbed carbon dioxide in said unit (8) from said flow-through;
(c) inducing an increase of the temperature of the sorbent material (3), preferably to a temperature between 60 and 110°C, starting the desorption of CO2;
(d) extracting at least the desorbed gaseous carbon dioxide from the unit (8) and separating gaseous carbon dioxide in or downstream of the unit (8);
(e) bringing the sorbent material (3) essentially to ambient atmospheric temperature conditions and ambient atmospheric pressure conditions;
wherein said sorbent material (3) comprises or consists of a porous structure of particles of support material functionalized on the surface and/or in the bulk with primary or secondary amines, or a combination thereof, capable of reversibly binding carbon dioxide, glued together with a glue in the form a contiguous three-dimensional structure,
wherein the particles of support material functionalized on the surface and/or in the bulk with primary or secondary amines, or a combination thereof, capable of reversibly binding carbon dioxide, make up 90-99.5% by weight, and the glue makes up 0.5-10%, by weight, and
wherein the mean particle size (D50) of the particles of support material functionalized on the surface and/or in the bulk with primary or secondary amines, or a combination thereof, capable of reversibly binding carbon dioxide, is in the range of 0.01 - 4 mm.

2. Method according to claim 1, wherein the glue is selected from at least one of a polyurethane and epoxy resin, and wherein preferably for the making of said contiguous three-dimensional structure said glue is reacted with a hardener,
wherein in case of polyurethane resin said hardener is preferably selected as at least one monomeric, oligomeric and/or polymeric di- or polyisocyanate, preferably systems based on or consisting of hexamethylendiisocyanate (HDI), toluenediisocyanate (TDI), diphenylmethanediisocyanate (MDI) or combinations thereof, particularly preferably a polyhexamethylendiisocyanate hardener, and
wherein in case of epoxy resin, said hardener is preferably selected from the group consisting of acidic hardener, preferably selected from the group consisting of maleic, and/or phthalic, hexahydrophthalic acid, and/or or amine hardener, preferably selected from the group consisting of polyamines and diamines, including polyethylene polyamine, hexamethylene diamine, triethylene tetramine, or a combination thereof.

3. Method according to claim 2, wherein the glue for the making of said contiguous 3-dimensional structure is a bisphenol A diglycidyl ether based epoxy resin, and/or an unmodified liquid epoxy resin, preferably with a viscosity at 25°C (ISO 12058-1) in the range of 8,000-15,000, preferably in the range of 9,500-12,000 mPa·s and/or with an epoxy equivalent weight in the range of 150-220, preferably in the range of 170-200 and/or with a density at 25°C (ISO 1675) in the range of 1.0-1.3, preferably in the range of 1.1-1.25 g/cm3.

4. Method according to any of the preceding claims, wherein the particles of support material functionalized on the surface and/or in the bulk with primary or secondary amines, or a combination thereof, capable of reversibly binding carbon dioxide, make 90-99.2% or 90-99% or 95-99% by weight, preferably 96-98% by weight, more preferably 96.5-98 % by weight and the glue makes up 0.8 - 10% or 1 - 10% or 1-5%, preferably 2-4% by weight, most preferably 2-3.5% by weight,
wherein preferably the epoxy resin complements to 100% by weight of said porous structure.

5. Method according to any of the preceding claims, wherein the mean particle size (D50) of the particles of support material functionalized on the surface and/or in the bulk with primary or secondary amines, or a combination thereof, capable of reversibly binding carbon dioxide, is in the range of 0.3 - 4 mm, 0.5 - 3 mm, 1 - 3 mm, 0.15 - 2 mm, 0.2 -1.5 mm, 0.25 - 1.6 mm, preferably in the range of 0.25-1.5 mm, most preferably in the range of 0.30-1.25 mm.

6. Method according to any of the preceding claims, wherein the contiguous three-dimensional, preferably self-supporting structure of the sorbent material takes the form of a sheet or monolith, or a combination thereof,
wherein preferably when taking the form of a sheet this is having a thickness in the range of 0.1-4 mm, or in the range of 0.2-2 mm, and or having a thickness in the range of 0.4-1.1 mm,
or wherein preferably when taking the form of a monolith the monolith takes the form of a structure having, in the direction of gas flow in operation, a plurality of through openings of preferably polygonal or round cross-section, preferably triangular, rectangular or square, pentagonal or hexagonal, oval or circular cross-section, wherein preferably the monolith takes the form of a honeycomb structure.

7. Method according to any of the preceding claims, wherein the contiguous three-dimensional structure has a length in adsorption flow direction in the range of 0.1-3 m.

8. Method according to any of the preceding claims, wherein the contiguous three-dimensional structure of the sorbent adsorbs gaseous carbon dioxide by at least one of flow over and flow-through, preferably by a combination of flow over and flow-through of the gas mixture in step (a).

9. Method according to the preceding claim, wherein the particles of support material functionalized on the surface and/or in the bulk with primary or secondary amines, or a combination thereof, capable of reversibly binding carbon dioxide comprise or consist of organic cross linked polymeric polystyrene based support material functionalized on the surface and/or in the bulk with primary or secondary amines, or a combination thereof, preferably cross-linked by divinylbenzene, wherein further preferably the polystyrene based support material is a styrene divinylbenzene copolymer, preferably to form the sorbent material surface and/or in the bulk functionalised with primary amine, preferably methyl amine, most preferably benzylamine moieties, wherein the solid polymeric support material is preferably obtained in a suspension polymerisation process.

10. Method according to any of the preceding claims, wherein step (c) involves injecting a stream of partially of fully saturated or superheated steam (4), preferably by flow-through through said unit (8) for heating the sorbent.

11. Method according to any of the preceding claims, wherein the particles of support material functionalized on the surface and/or in the bulk with primary or secondary amines, or a combination thereof, capable of reversibly binding carbon dioxide has a nitrogen content in the range 4-50 wt.%, preferably in the range of 5 - 25 wt.% or 5 - 15 wt.% or 6 - 12 wt.%, in each case for dry sorbent material.

12. Method according to any of the preceding claims, wherein the gas mixture is ambient atmospheric air.

13. A method for preparing a sorbent material (3), preferably for use in a method according to any of claims 1-12, wherein the sorbent material (3) comprises or consists of a porous structure of particles of support material functionalized on the surface and/or in the bulk with primary or secondary amines, or a combination thereof, capable of reversibly binding carbon dioxide, glued together, preferably with a glue selected from at least one of a polyurethane and epoxy resin, in the form a contiguous three-dimensional structure,
wherein the particles of support material functionalized on the surface and/or in the bulk with primary or secondary amines, or a combination thereof, capable of reversibly binding carbon dioxide, make up 90-99.5%, preferably 90-99% by weight, and the glue makes up 0.5 - 10%, preferably 1-10%, by weight, and
wherein the mean particle size (D50) of the particles of support material functionalized on the surface and/or in the bulk with primary or secondary amines, or a combination thereof, capable of reversibly binding carbon dioxide, is in the range of 0.01 - 4 mm, preferably in the range of 0.1-4mm,
wherein in a first step said particles of support material functionalized on the surface and/or in the bulk with primary or secondary amines, or a combination thereof, capable of reversibly binding carbon dioxide are provided in dried form, mixed and wetted with a liquid comprising the glue and/or consisting of the glue together with a suitable and adapted hardener,
and wherein in a second step the wetted particles are formed into the desired contiguous three-dimensional structure and subjected to hardening conditions, preferably by establishing a temperature of at least 40°C, preferably of at least 50°C, most preferably of at least 60°C, and/or no pressure or a pressure of in the range of 10-150 kN, preferably for a time span of at least one hour, more preferably at least 6 hours, most preferably in the range of 8-15 hours.

14. Sorbent material (3) for use in a method according to any of claims 1-13, preferably obtained using a method according to claim 13,
wherein said sorbent material (3) comprises or consists of a porous structure of particles of support material functionalized on the surface and/or in the bulk with primary or secondary amines, or a combination thereof, capable of reversibly binding carbon dioxide, glued together with a glue, preferably selected from at least one of a polyurethane and epoxy resin, in the form a contiguous three-dimensional structure,
wherein the particles of support material functionalized on the surface and/or in the bulk with primary or secondary amines, or a combination thereof, capable of reversibly binding carbon dioxide, make up 90-99.5%, preferably 90-99% by weight, and the glue makes up 0.5 - 10%, preferably 1-10%, by weight, and
wherein the mean particle size (D50) of the particles of support material functionalized on the surface and/or in the bulk with primary or secondary amines, or a combination thereof, capable of reversibly binding carbon dioxide, is in the range of 0.01 - 4mm, preferably 0.1 - 4 mm.

15. Use of a sorbent material (3) made according to claim 13 or of a sorbent material (3) according to claim 14 for separating gaseous carbon dioxide from a gas mixture, preferably from at least one of ambient atmospheric air (1), flue gas and biogas, preferably for direct air capture, in particular using a temperature, vacuum, or temperature/vacuum swing process, preferably using a process in which injecting a stream of partially of fully saturated or superheated steam (4) by flow-through the unit is used for inducing an increase of the temperature of the sorbent material (3) to a temperature between 60 and 110°C, resulting in the at least partial desorption of CO2.
